# EUROPEAN PATENT APPLICATION

(11) **EP 4 432 025 A1**
(43) Date of publication of application: **18.09.2024**
(21) Application number: 24154990.6
(22) Date of filing: 31.01.2024
(51) Int. Cl.: G05B 17/02, G06Q 10/063, G06Q 10/04

(54) **METHOD AND SYSTEM FOR KNOWLEDGE-BASED ENGINEERING OF DIGITAL TWIN FOR PLANT MONITORING AND OPTIMIZATION**

(30) Priority: 17.03.2023 IN 202321018296
(71) Applicant: Tata Consultancy Services Limited, Maharashtra (IN)
(72) Inventor: VALE, SUSHANT SHRINIVAS, 411013 Pune (IN); MAITI, SANDIPAN, 411013 Pune (IN); ROY CHAUDHURI, SUBHROJYOTI, 411013 Pune (IN); NISTALA, SRI HARSHA, 411013 Pune (IN); REDDY, SREEDHAR, 411013 Pune (IN); SUBRAMANIAN, SIVAKUMAR, 411013 Pune (IN); DEODHAR, ANIRUDH MAKARAND, 411013 Pune (IN); RUNKANA, VENKATARAMANA, 411013 Pune (IN)
(74) Representative: Goddar, Heinz J.

(57) **Abstract**

Existing approaches for building digital twins specific to industrial plants require industry domain experts, process modeling engineers, data scientists, and solution developers to spend considerable time and effort to build the right solution. This is not an easily reproducible process. For each type of industry and for each specific plant, the design, and development process must start all over, more or less from scratch and the effort needs to be reinvested. Hence this is not a scalable proposition. Method and system disclosed herein provide a knowledge-based plant monitoring and optimization approach. In this approach, for a given high-level problem statement, a detailed problem definition is derived, a plant view of interest is identified using the knowledge based approach, and in turn plant data of interest is identified. Further, a digital twin is generated using the plant data of interest, which is then used for the plant monitoring and optimization.

## Description

### CROSS-REFERENCE TO RELATED APPLICATIONS AND PRIORITY

The present application claims priority to Indian application no. 202321018296, filed on March 17, 2023.

### TECHNICAL FIELD

The disclosure herein generally relates to industrial plant monitoring, and, more particularly, to a method and system for knowledge-based engineering of digital twin for plant monitoring and optimization.

### BACKGROUND

Digital twins are heralding a new paradigm in process and manufacturing industries by providing real-time decision support for a range of problems such as improving plant productivity, reducing cost of production, minimizing emissions, enhancing availability of equipment, and eliminating safety related incidents. However, building digital twin solutions is a knowledge and effort intensive activity. Knowledge of the business domain as well as data science domain, such as knowledge of plant, processes, phenomena, equipment, materials, data preprocessing, machine learning tasks, is necessary to formulate the right business problem, decomposing it into a set of technical problems and developing digital twin based technical solutions for them.

Existing approaches for building digital twins specific to industrial plants require industry domain experts, process modeling engineers, data scientists, and solution developers to come together and spend considerable time and effort to build the right solution - currently, this is not an easily reproducible process. For each type of industry and for each specific plant, the design, and development process must start all over, more or less from scratch and the effort needs to be reinvested. Hence this is not a scalable proposition.

### SUMMARY

Embodiments of the present disclosure present technological improvements as solutions to one or more of the above-mentioned technical problems recognized by the inventors in conventional systems. For example, in one embodiment, a processor implemented method is provided. In this method, initially a high-level problem statement as input is received, via one or more hardware processors. Further, one or more problem types associated with the high-level problem statement are identified, via the one or more hardware processors. Further, one or more detailed technical problem definitions are derived, via the one or more hardware processors, from the high-level problem statement, based on the one or more identified problem types, by executing one or more associated problem type specific problem definition workflows, using a plant domain knowledge and a problem knowledge. Further, a plant view of interest is identified, via the one or more hardware processors, for the detailed technical problem definition, using a plant configuration knowledge.

In another embodiment, the method involves using the plant view of interest for identifying the plant data of interest, which involves the following steps. Initially, a real-time plant data is received as input, wherein the real-time plant data includes values of a plurality of operational parameters. Further, the received real-time plant data is compared with a plurality of operational parameters identified in the plant view of interest. Further, the plant data of interest is determined based on matches found for the received real-time plant data with the plurality of operational parameters.

In yet another embodiment, the method involves building a digital twin for the derived one or more technical problem definitions, using the plant domain knowledge, the problem knowledge and the plant data of interest, using one or more knowledge-guided workflows. This method includes generating a plurality of digital twin models comprising physics-based and data-based digital twin models, by executing one or more knowledge guided workflows; and generating an integrated digital twin by combining the plurality of digital twin models.

In yet another embodiment, the method includes using the integrated digital twin model to solve the high-level problem statement, which involves the following steps. Initially, a right composition of one or more digital twin models to use is identified, from the plurality of digital twin models in the integrated digital twin model, based on a digital twin model knowledge, and the plant view of interest at an instance. Further, a right solution configuration for solving the high-level problem statement is identified, using a solution space knowledge, and the current plant view of interest. Further, the high-level problem statement is solved using the right composition of one or more digital twin models and the right solution configuration.

In yet another embodiment, the method involves updating the digital twin model if a measured performance of the digital twin model is below a threshold. Updating the digital twin model includes the following steps. Initially, one or more causes for a performance degradation of the digital twin model are identified based on the plant domain knowledge. Further, the one or more detailed problem definitions are reformulated. Further, the digital twin model is updated by identifying a mode based on the identified one or more causes and reformulated one or more detailed problem definitions, and invoking an associated model tuning workflow.

In yet another embodiment, a system is provided. The system includes one or more hardware processors, a communication interface, and a memory storing a plurality of instructions. The plurality of instructions when executed, cause the one or more hardware processors to receive a high-level problem statement as input. Further, one or more problem types associated with the high-level problem statement are identified, via the one or more hardware processors. Further, one or more detailed technical problem definitions are derived, via the one or more hardware processors, from the high-level problem statement, based on the one or more identified problem types, by executing one or more associated problem type specific problem definition workflows, using a plant domain knowledge and a problem knowledge. Further, a plant view of interest is identified, via the one or more hardware processors, for the detailed technical problem definition, using a plant configuration knowledge.

In yet another embodiment, the system uses the plant view of interest for identifying the plant data of interest, which involves the following steps. Initially, a real-time plant data is received as input, wherein the real-time plant data includes values of a plurality of operational parameters. Further, the received real-time plant data is compared with a plurality of operational parameters identified in the plant view of interest. Further, the plant data of interest is determined based on matches found for the received real-time plant data with the plurality of operational parameters.

In yet another embodiment, the system builds a digital twin for the derived one or more technical problem definitions, using the plant domain knowledge, the problem knowledge and the plant data of interest, using one or more knowledge-guided workflows. This includes generating a plurality of digital twin models comprising physics-based and data-based digital twin models, by executing one or more knowledge guided workflows, and generating an integrated digital twin by combining the plurality of digital twin models.

In yet another embodiment, the system is configured to use the integrated digital twin model to solve the high-level problem statement, which involves the following steps. Initially, a right composition of one or more digital twin models to use is identified, from the plurality of digital twin models in the integrated digital twin model, based on a digital twin model knowledge, and the plant view of interest at an instance. Further, a right solution configuration for solving the high-level problem statement is identified, using a solution space knowledge, and the current plant view of interest. Further, the high-level problem statement is solved using the right composition of one or more digital twin models and the right solution configuration.

In yet another embodiment, the system is configured to update the digital twin model if a measured performance of the digital twin model is below a threshold. Updating the digital twin model includes the following steps. Initially, one or more causes for a performance degradation of the digital twin model are identified based on the plant domain knowledge. Further, the one or more detailed problem definitions are reformulated. Further, the digital twin model is updated by identifying a mode based on the identified one or more causes and reformulated one or more detailed problem definitions, and invoking an associated model tuning workflow.

In yet another aspect, a non-transitory computer readable medium is provided. The non-transitory computer readable medium includes a plurality of instructions, which when executed, causes one or more hardware processors to initially receive a high-level problem statement as input, via one or more hardware processors. Further, one or more problem types associated with the high-level problem statement are identified, via the one or more hardware processors. Further, one or more detailed technical problem definitions are derived, via the one or more hardware processors, from the high-level problem statement, based on the one or more identified problem types, by executing one or more associated problem type specific problem definition workflows, using a plant domain knowledge and a problem knowledge. Further, a plant view of interest is identified, via the one or more hardware processors, for the detailed technical problem definition, using a plant configuration knowledge.

In yet another embodiment, the plurality of instructions in the non-transitory computer readable medium causes the one or more hardware processors to use the plant view of interest for identifying the plant data of interest, which involves the following steps. Initially, a real-time plant data is received as input, wherein the real-time plant data includes values of a plurality of operational parameters. Further, the received real-time plant data is compared with a plurality of operational parameters identified in the plant view of interest. Further, the plant data of interest is determined based on matches found for the received real-time plant data with the plurality of operational parameters.

In yet another embodiment, the plurality of instructions in the non-transitory computer readable medium causes the one or more hardware processors to build a digital twin for the derived one or more technical problem definitions, using the plant domain knowledge, the problem knowledge and the plant data of interest, using one or more knowledge-guided workflows. This method includes generating a plurality of digital twin models comprising physics-based and data-based digital twin models, by executing one or more knowledge guided workflows, and generating an integrated digital twin by combining the plurality of digital twin models.

In yet another embodiment, the plurality of instructions in the non-transitory computer readable medium causes the one or more hardware processors to use the integrated digital twin model to solve the high-level problem statement, which involves the following steps. Initially, a right composition of one or more digital twin models to use is identified, from the plurality of digital twin models in the integrated digital twin model, based on a digital twin model knowledge, and the plant view of interest at an instance. Further, a right solution configuration for solving the high-level problem statement is identified, using a solution space knowledge, and the current plant view of interest. Further, the high-level problem statement is solved using the right composition of one or more digital twin models and the right solution configuration.

In yet another embodiment, the plurality of instructions in the non-transitory computer readable medium causes the one or more hardware processors to update the digital twin model if a measured performance of the digital twin model is below a threshold. Updating the digital twin model includes the following steps. Initially, one or more causes for a performance degradation of the digital twin model are identified based on the plant domain knowledge. Further, the one or more detailed problem definitions are reformulated. Further, the digital twin model is updated by identifying a mode based on the identified one or more causes and reformulated one or more detailed problem definitions, and invoking an associated model tuning workflow.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for knowledge-based engineering of digital twin for plant monitoring and optimization, according to some embodiments of the present disclosure.
FIG. 2 is a flow diagram depicting steps involved in the knowledge-based engineering of digital twin for plant monitoring and optimization, by the system of FIG. 1, according to some embodiments of the present disclosure.
FIG. 3 is a flow diagram depicting steps involved in a process of determining a plant data of interest, by the system of FIG. 1, according to some embodiments of the present disclosure.
FIG. 4 is a flow diagram depicting steps involved in a process of generating an integrated digital twin, by the system of FIG. 1, according to some embodiments of the present disclosure.
FIG. 5 is a flow diagram depicting steps involved in a process of solving a high-level problem statement, by the system of FIG. 1, according to some embodiments of the present disclosure.
FIG. 6 is a flow diagram depicting steps involved in a process of updating the integrated digital twin, by the system of FIG. 1, according to some embodiments of the present disclosure.
FIGS. 7 through 12 depict example implementation of the system 100, and associated components, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing approaches for building digital twins specific to industrial plants require industry domain experts, process modeling engineers, data scientists, and solution developers to come together and spend considerable time and effort to build the right solution - currently, this is not an easily reproducible process. For each type of industry and for each specific plant, the design, and development process must start all over, more or less from scratch and the effort needs to be reinvested. Hence this is not a scalable proposition.

In the method and system disclosed in the embodiments herein provide a knowledge-based engineering of digital twin for plant monitoring and optimization. Initially a high-level problem statement is received as input. Further, one or more problem types associated with the high-level problem statement are identified and one or more detailed technical problem definitions are derived from the high-level problem statement. Deriving the technical problem definitions is based on the one or more identified problem types, by executing one or more associated problem type specific problem definition workflows, using a plant domain knowledge and a problem knowledge. Further, a plant view of interest is identified for the detailed technical problem definition, using a plant configuration knowledge. From the plant view of interest identified, plant data of interest is obtained, which is used for building a knowledge based digital twin for industrial plant monitoring and optimization.

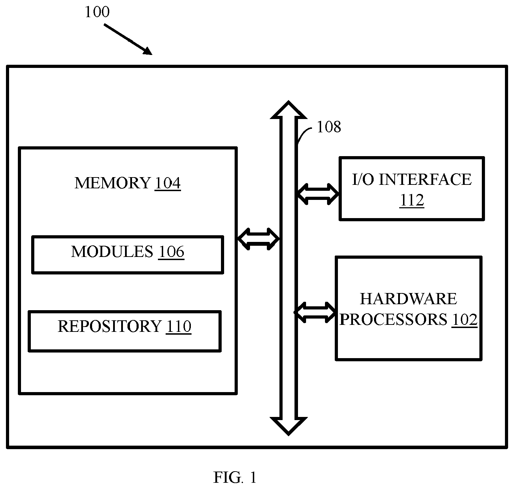

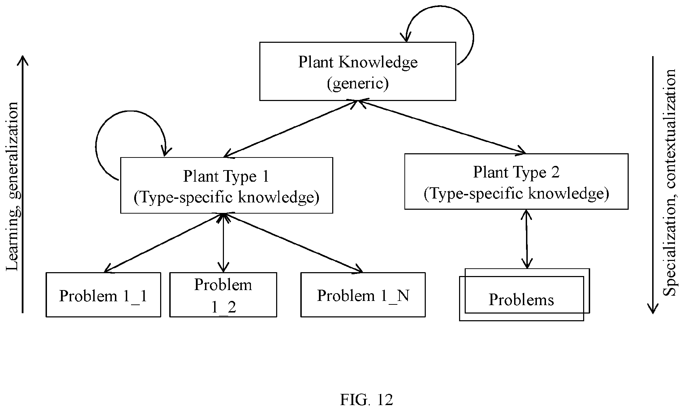

Referring now to the drawings, and more particularly to FIG. 1 through FIG. 12, where similar reference characters denote corresponding features consistently throughout the figures, there are shown preferred embodiments and these embodiments are described in the context of the following exemplary system and/or method.

FIG. 1 illustrates an exemplary system 100 for knowledge-based engineering of digital twin for plant monitoring and optimization, according to some embodiments of the present disclosure.

The system 100 includes or is otherwise in communication with hardware processors 102, at least one memory such as a memory 104, and I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of knowledge-based engineering of digital twin for plant monitoring and optimization, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the knowledge-based engineering of digital twin for plant monitoring and optimization.

The data repository (or repository) 110 may include a plurality of abstracted piece of code for refinement and data that is processed, received, or generated as a result of the execution of the plurality of modules in the module(s) 106.

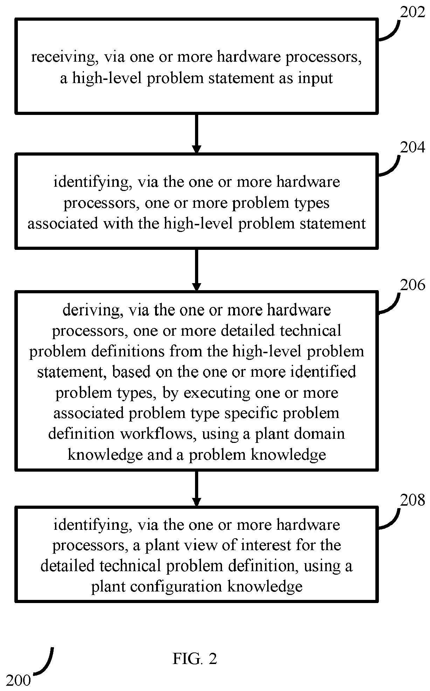

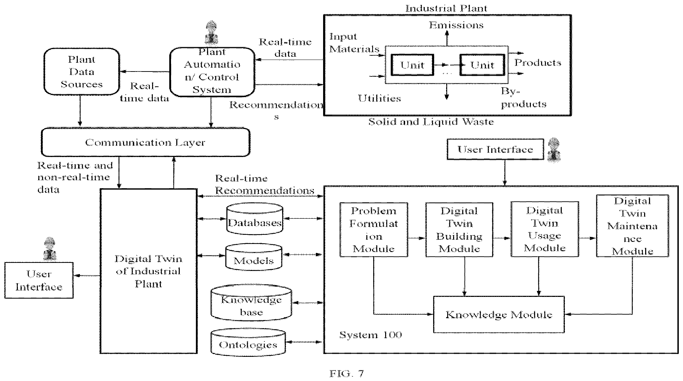

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2 through FIG. 6. For ease of explanation, various steps in method 200 are explained with reference to different modules as depicted in the example implementations in FIGS. 7 through 12, which are implementations of the one or more hardware processors 102.

At step 202 of the method 200, the system 100 receives, via the one or more hardware processors 102, a high-level problem statement as input. A business problem starts with a high-level objective such as improving plant productivity, reducing plant OPEX, etc. These high-level problems can be further broken down into sub problems. For example, OPEX reduction includes reducing energy consumption, reducing cost of maintenance, reducing material wastage, etc., as sub problems. These problems can have further sub problems in specific plant type contexts. After a series of refinements these finally translate into a set of technical problems such as optimization, fault prediction, fault diagnosis, etc. These technical problems need to be precisely defined in the context of a plant type and plant instance, so that right digital twins can be built and composed together to solve the target business problem.

Further, at step 204 of the method 200, the system identifies via the one or more hardware processors 102, one or more problem types associated with the high-level problem statement. Further, at step 206 of the method 200, one or more detailed technical problem definitions are derived, via the one or more hardware processors 102, from the high-level problem statement, based on the one or more identified problem types, by executing one or more associated problem type specific problem definition workflows, using a plant domain knowledge and a problem knowledge. Further, at step 208 of the method 200, a plant view of interest is identified, via the one or more hardware processors, for the detailed technical problem definition, using a plant configuration knowledge.

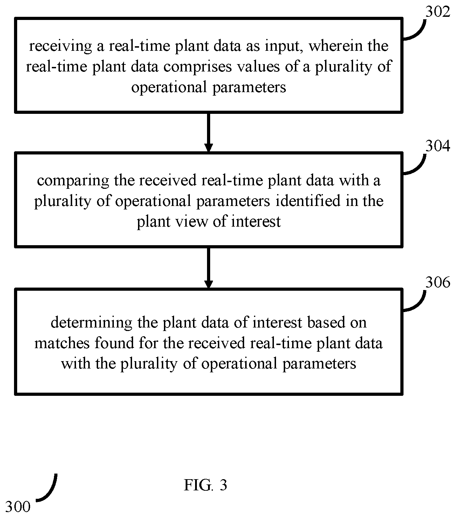

The system 100 then uses the plant view of interest for identifying the plant data of interest, which involves steps 302 through 306, as depicted in method 300 of FIG. 3. At step 302 of the method 300, the system 100 receives a real-time plant data as input, wherein the real-time plant data includes values of a plurality of operational parameters. Further, at step 304 of the method 300, the system 100 compares the received real-time plant data with a plurality of operational parameters identified in the plant view of interest. Further, at step 306 of the method 300, the system 100 determines the plant data of interest based on matches found for the received real-time plant data with the plurality of operational parameters. Plant data is accompanied by data tags, which represent the names of specific plant properties being measured. Corresponding parameters in the plant view can be identified by matching these tags and paths of plant view parameters. This can also consider plant domain knowledge like typical property values, value relationships, along with the observed plant data characteristics.

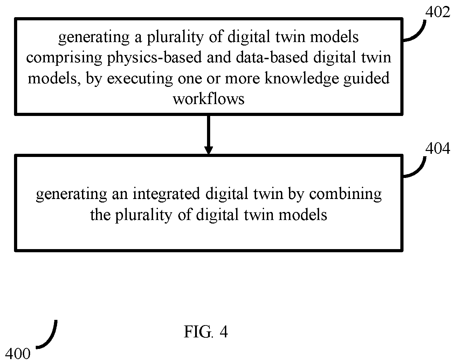

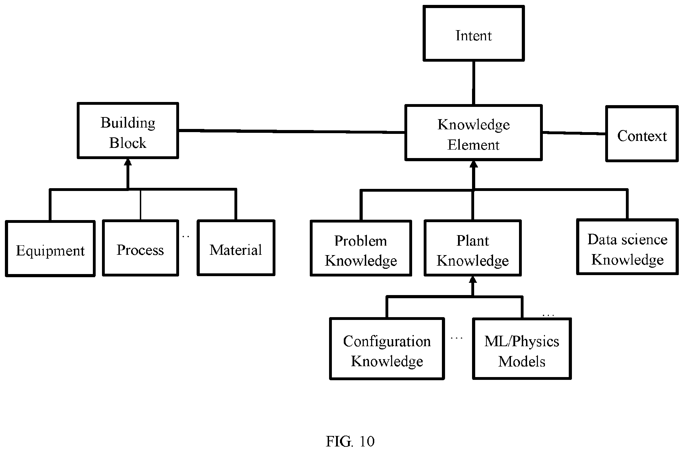

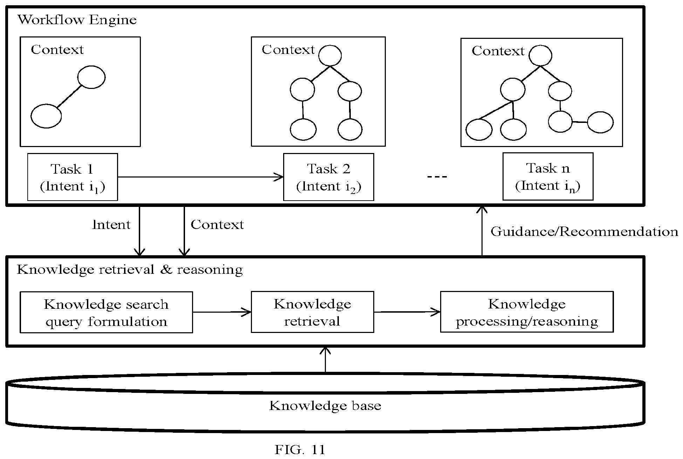

Further, a digital twin is built for the derived one or more technical problem definitions, using the plant domain knowledge, the problem knowledge, and the plant data of interest, using one or more knowledge-guided workflows. Steps involved in the process of building the digital twin are depicted in method 400 in FIG. 4 and are explained hereafter. In this process, at step 402 of the method 400, the system 100 generates a plurality of digital twin models comprising physics-based and data-based digital twin models, by executing one or more knowledge guided workflows (an example of the knowledge guided workflows is depicted in FIG. 11). In an embodiment, the process of building the digital twin using the knowledge based approach is also termed as knowledge-based engineering of digital twin. In a multi-task workflow, different tasks may have different knowledge requirements in different contexts. Accordingly, different knowledge elements get delivered to execute the tasks, some picked up from generic plant context, some from plant type context and some from plant instance context. The advantage of such knowledge delivery mechanism is that as new knowledge is gained/populated, it gets picked up and composed automatically. As shown in the FIG. 11, a workflow is composed of a series of tasks, where the tasks can have associated intents, which are modeled explicitly using the knowledge model, shown in FIG. 10. Knowledge about these intents is captured in the knowledge base, modeled using the knowledge model, where applicability conditions for the knowledge is also explicitly captured as knowledge context. As shown in FIG. 11, the workflow engine tracks the current process context and intent. In the knowledge retrieval and reasoning engine, an intent specific knowledge query is constructed, knowledge elements matching the process context are retrieved, and executed to provide guidance for the workflow.

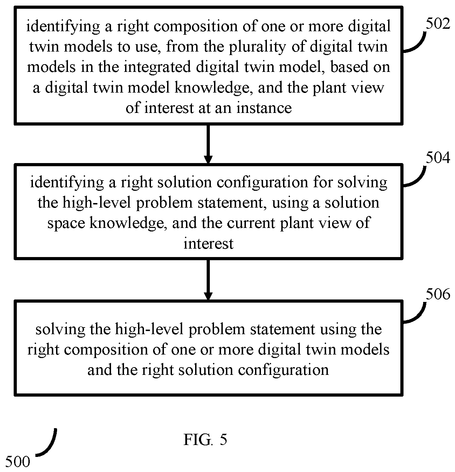

Further, at step 404 of the method 400, the system 100 may generate an integrated digital twin by combining the plurality of digital twin models. The integrated digital twin maybe then used for solving any high-level problem statement, which may or may not be real-time input to the system 100. Various steps involved in the process of using the integrated digital twin for solving any high-level problem statement are depicted in method 500 in FIG. 5, and are explained hereafter. The integrated digital twin is generated by combining the plurality of digital twin models. Not all these digital twin models may be required to process the high-level problem statement collected as input. At step 502 of the method 500, the system 100 identifies a right composition of one or more digital twin models to be used for processing the high-level problem statement, from the plurality of digital twin models in the integrated digital twin model, based on a digital twin model knowledge, and the plant view of interest at an instance. Based on plant domain knowledge, the system 100 identifies current regime in the current plant data obtained from the plant connected to the digital twin. Suitable configuration of the digital twin is obtained, in terms of the digital twin models suitable for the regime identified and the current plant configuration (that includes equipment, environment configuration). This digital twin configuration is used to solve the problem. Further, a right solution configuration for solving the high-level problem statement is identified, using a solution space knowledge, and the current plant view of interest. Knowledge about solution space, e.g., knowledge about right algorithm to use for solving current optimization problem in current context. Further, the high-level problem statement is solved using the right composition of one or more digital twin models and the right solution configuration. The digital twin configuration obtained thus, interacts with the plant via a communication layer and receives real-time and non-real-time data from several industrial plant databases (FIG. 7). It pre-processes the plant data and uses it to provide services such as prediction and forecasting of performance indicators, operating regime identification and classification, fault detection, fault diagnosis, estimation of remaining useful life, process optimization, etc. The low-level technical problem solutions are combined to serve as the solution for the high-level problem statement. E.g., the optimization problem solution takes care of improving plant productivity, while fault diagnosis helps in reducing plant downtime and both together address the high-level plant profitability problem.

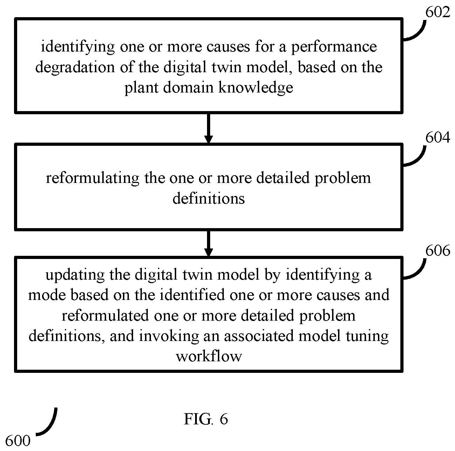

Like any other machine learning or deep leaning models, the integrated digital twin also is required to be updated from time to time, so that a desired performance level is obtained. The system 100 may check and measure performance of each of the plurality of digital twin models from time to time i.e., at periodic intervals or after every instance of high level problem statement solving. The system 100 may use any suitable available approach for measuring the performance of each of the digital twin models. For instance, the system 100 may collect feedback from a user as to whether a high level problem solving done by the system 100 matched expectations of the user or not (which may be specified by the user in terms of a percentage of relevance). If it hasn't, then it means that the digital twin that was used to solve the high level problem statement isn't performing intended way, and maybe a trigger for the system 100 to perform updation of the digital twin model. Various steps involved in the process of updating the digital twin are depicted in method 600 in FIG. 6, and are explained hereafter. At step 602 of the method 600, the system 100 identifies one or more causes for a performance degradation of the digital twin model based on the plant domain knowledge.

In order to identify the one or more causes for performance degradation, the system 100 monitors a digital twin model's operation for any deviations in the performance. Once a deviation is detected, the cause for the deviation is determined. This is based on the knowledge about the plant and plant data. First the quality of input data to the digital twin model is checked. Plant domain knowledge prescribes the valid/normal input data quality ranges. If the input data is not within valid range, further causal analysis is performed to see if this is a sensor failure case or process anomaly case. Specific plant instance knowledge can help in determining if the sensor data can be validated using other sensors in the vicinity or a soft sensor needs be used. If it turns out to be a sensor failure case, and the sensor has no alternative soft sensor, a new model can be built, which amounts to reformulating problem statement to include the relevant causal parameters and updating the digital twin specification with this soft sensor model, at step 604 of the method 600. If the input data is in normal range, the model itself may be performing below the expectation. To determine the cause of this, one can use the knowledge about the domain situation in which the model is supposed to work fine and compare it with the current plant situation. It comprises of steady state identification, new regime shift identification, raw materials characterization, etc. This may reveal that the model is not suitable in the current plant situation. This can either trigger a model switch that changes the current digital twin configuration or trigger model updating workflows as in step 606 of the method 600, where model may have to be fine-tuned or re-learnt afresh based on the extent of deviation. The different modes possible are parameter learning, transfer learning, fresh learning, reinforcement learning, and so on.

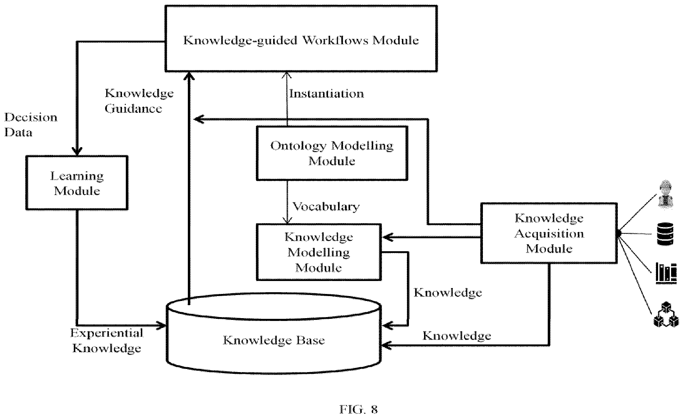

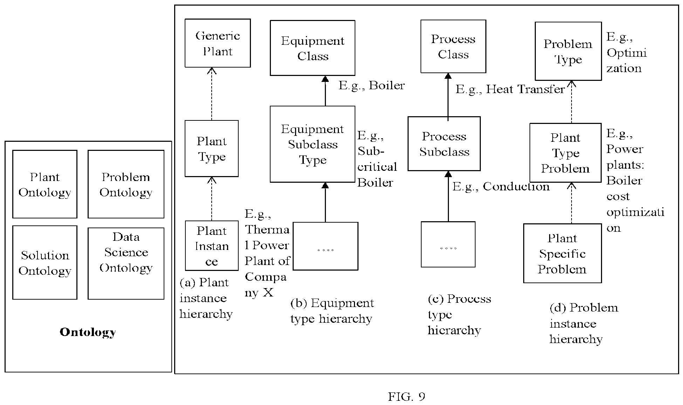

In an example implementation of the system 100, as depicted in FIG. 7, the system 100 includes a problem formulation module, a digital twin building module, a digital twin usage module, and a digital twin maintenance module, which are implementations of the one or more hardware processors 102, and various steps involved in method executed by the system 100, as in method 200, are distributed across these modules. For example, the problem formulation module handle the step of formulating the high level problems, the digital twin building module handles the step of building the digital twin, the digital twin usage module is configured to use the digital twin and generate corresponding recommendations/predictions, and the digital twin maintenance module is configured to handle updation of one or more of the digital twin models. The system 100 has submodules configured for ontology modelling, such as the ontology modelling module depicted in FIG. 8 which comprises conceptual models in terms of which knowledge of different domains is expressed. Subcomponents of the ontology modelling module, such as plant (including product, process, phenomenon, material), problem, solution, and data science ontologies to model respective domains, are depicted in FIG. 9. Further, FIG. 9 depicts ontologies to indicate the kind of detail captured at different levels in these ontologies. Modeling the ontology at multiple levels of abstraction helps to capture knowledge and its applicability context at the right levels of abstraction, thereby maximizing its reuse potential. These hierarchies could be at instance levels. e.g., Plant ontology describes general plant concepts, Power Plant type ontology, describing a specific plant type, can be treated as an instance of the concepts in Plant ontology, and a specific Power Plant X can be further thought of as instance of the Power plant ontology. This helps in capturing knowledge that is applicable across plant types (using general plant ontology), across plants of same type (using plant type ontology) and specific to a plant (using plant specific ontology). Type hierarchies also play a similar role. e.g., Boiler and sub-types of Boiler, such as Sub-critical Boiler, Super-critical Boiler, help in capturing knowledge at right level of abstraction. The system 100 further includes, in the example implementation, a knowledge modelling module, which provides a way to capture the knowledge corresponding to plant domain, problem domain, solution domain, and data science domain that can be used in the various digital twin processes. As depicted in FIG. 10, the plant knowledge could be of various kinds-- configuration knowledge, materials, equipment, environment, physics models, ML models, qualitative models, and so on. This knowledge is further organized around building blocks. Building blocks could be equipment building blocks, process building blocks and so on. Knowledge associated with each of the blocks may be of different kinds, depending on intent as depicted in FIG. 10. Each of these knowledge elements could also have an associated context that describes the context in which the knowledge is applicable. FIG. 11 depicts a knowledge guide workflow module which executes one or more knowledge guided workflows for generating the digital twin models. As depicted the knowledge guide workflow module uses the multi-task workflow, wherein different tasks may have different knowledge requirements in different contexts. Accordingly, different knowledge elements get delivered. Based on the intent of the task and the problem context, right knowledge element is retrieved and reasoned with to provide the guidance. Based on the problem context, some knowledge elements may be picked up from generic plant context, some from plant type context and some from plant instance context. Such a knowledge delivery mechanism has an advantage that as new knowledge is gained/populated, it gets picked up and composed automatically.

In an example scenario, the detailed technical problem definitions is of an optimization problem type. Defining the optimization problem type comprises executing a workflow for optimization problem definition using the plant domain knowledge and an optimization problem type knowledge, wherein the workflow for optimization problem definition comprises one or more knowledge-guided steps for selecting one or more objectives, identifying one or more relevant Key Performance Indicators (KPIs), identifying one or more KPIs influencing variables, identifying one or more manipulated and disturbance variables, and identifying one or more constraints.

One such example execution for the optimization problem type technical problem definition is explained below:
a. High level business problem statement: Reduce operating cost for boiler in a thermal power plant
b. Problem type identification: Optimization
c. Identification of Initial plant view of interest: Identify the initial plant view from the problem-statement, based on the knowledge about plants domain, plant type and specific plant
d. Operating cost for any plant is contributed by factors such as raw material cost, energy cost, etc. This is general knowledge at plant domain level
e. Raw material cost for operating a boiler in a coal-fired thermal power plant comes from Coal, Water cost. And, energy cost comes from energy consumed by various equipment, such as pulveriser, fans, etc. This is plant type level knowledge. This can be used to derive the initial plant view of interest, where specific equipment/plant level KPIs are identified, and corresponding phenomena/process/equipment are also identified. This can be done by appropriately querying knowledge graph at general plant domain level and corresponding instances at plant type level
f. KPI identification: In this step, based on plant type knowledge, selected high level KPIs are further refined to the level of plant/equipment/process parameters and suggested for selection to the user. This can be done by appropriately querying knowledge graph of plant type that returns the associated low level KPIs
   E.g., {Boiler in Thermal Power Plant, Operating Cost} => [Coal cost, Pulverizer power cost, Fan power cost,.] => [Coal-flowrate, Current-pulverize, Current-IDF,.])
g. Derive expressions to combine lower level KPIs using the KPI knowledge (e.g., Coal cost = Coal-price-per-volume-unit x Coal-flowrate, Aux Power cost = Voltage-pulverize X Current-pulverize x Power-price-per-watt + Voltage-IDF X Current-IDF X Power-price-per-watt, etc.)
h. Identification of plant view of interest: The KPI identification step gives us a specific seed plant view of interest that can then be used to derive the rest of the relevant plant view of interest, using plant type knowledge (in the form of plant type knowledge graph and plant type configuration knowledge). This involves identifying the relevant equipment based on the selected low level KPI (mapped to phenomena/process/plant parameter), using knowledge about phenomena variables mapping to plant/process parameters and in turn mapping to equipment parameters
i. Traversing the connection knowledge at the plant type level, the equipment chain connected to the identified equipment can be identified. With this view of the plant type, the specific plant view of interest can be instantiated with the help of plant type configuration knowledge represented as a feature model. This process involves instantiating specific plant parts from the plant type view and inferring rest of the relevant parts using reasoning carried out over the plant type configuration knowledge model
   E.g., initial plant type view, based on low-level KPIs, contains equipment boiler, IDF, pulverize (based on the KPI level parameters).
j. How the equipment are connected to other equipment can be viewed by traversing connector links at the plant type level model, which gives Super Heater, Re-Heater, etc. This plant type view can be then instantiated to get specific boiler instance, specific superheater instances, and pulveriser instances in the current plant. While instantiating the plant model, existence/non-existence of many other equipment maybe instantiated by reasoning over the plant type configuration knowledge
   E.g., suppose boiler is a sub-critical boiler, then a drum equipment part will be present and can be added to the plant model automatically.
k. Identification of variables influencing KPI: For this, knowledge in the form of causal graphs derived from the plant view of interest, can be reasoned with. The information about inputs and outputs of equipment and their interconnections captured so far, equipment parameters and mapping of equipment parameters to process parameters and in turn phenomena parameters, if any, is used to generate the causal graphs. These graphs capture the influencing parameters and the influenced parameters.
l. Collect the list of all root variables (RVs) in the causal graph whose influence reaches the identified KPI parameters. RVs = MVs + DVs. E.g., Burner Angle, AA Damper, Pulverizer Out Temperature, Load, etc.
m. Potential MVs and DVs suggestion: This is possible for a plant type, using knowledge about the various parameters and associated parameter categories/types in a plant. A more finer level knowledge, about which of the RVs can be treated as MVs, can also be captured using the context of problem and plant view of interest.
   E.g., Burner Angle, AA Damper, Pulverizer Out Temperature are potential MVs, while Load is potentially a DV.
n. Knowledge related to range of MV parameters can be used to refine the problem further.
   E.g., Burner angle [5-15]
o. Constraints identification: Relevant constraints can be identified and suggested for the optimization problem, using the causal graph-based reasoning.
p. The parameters that are influenced (directly or indirectly) by the selected RVs can be found out using the causal graph model.
q. Knowledge about typical constraints involving these parameters, like value ranges or relationships with other parameters that must hold true etc., can be short listed as potential list of constraints for the current optimization problem.
   E.g., parameters influenced (Metal temperature, Valve, nOx, CO,.) and constraints, such as range of parameters (Metal temperature [595-600], Valve [20-50], nOx [0-120]).
r. Objective function configuration: In this step the objective function/s used for optimization is configured.
s. If the MVs influencing the different KPIs are disjoint, then the problem can be defined as a set of independent single-objective optimization problems.
t. If the MVs overlap, then domain knowledge can guide in configuring the problem in one of the following ways:
   i. A multi-objective, pareto optimization problem
   ii. A weighted single objective optimization problem, with different weights for different objectives.
   iii. Optimize one objective and relax other objectives into constraints (range constraints, threshold constraints, etc.).
u. The detailed technical problem definition thus obtained serves as the requirement specification for further steps of digital twin solution building.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of knowledge based monitoring and optimization of industrial systems. The embodiment, thus provides a method and system for knowledge-based engineering of digital twin for plant monitoring and optimization. Moreover, the embodiments herein further provide a mechanism of building a digital twin using a knowledge based approach, and further using the digital twin for processing real-time data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives

(including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving (202), via one or more hardware processors, a high-level problem statement as input;
identifying (204), via the one or more hardware processors, one or more problem types associated with the high-level problem statement;
deriving (206), via the one or more hardware processors, one or more detailed technical problem definitions from the high-level problem statement, based on the one or more identified problem types, by executing one or more associated problem type specific problem definition workflows, using a plant domain knowledge and a problem knowledge; and
identifying (208), via the one or more hardware processors, a plant view of interest for the detailed technical problem definition, using a plant configuration knowledge.

2. The method as claimed in claim 1, comprising identifying the plant data of interest using the plant view of interest, by:
receiving (302) a real-time plant data as input, wherein the real-time plant data comprises values of a plurality of operational parameters;
comparing (304) the received real-time plant data with a plurality of operational parameters identified in the plant view of interest; and
determining (306) the plant data of interest based on matches found for the received real-time plant data with the plurality of operational parameters.

3. The processor implemented method as claimed in claim 2, comprising building a digital twin for the derived one or more technical problem definitions, using the plant domain knowledge, the problem knowledge and the plant data of interest, using one or more knowledge-guided workflows, comprising:
generating (402) a plurality of digital twin models comprising physics-based and data-based digital twin models, by executing one or more knowledge guided workflows; and
generating (404) an integrated digital twin by combining the plurality of digital twin models.

4. The method as claimed in claim 3, wherein the integrated digital twin model is used to solve the high-level problem statement, wherein solving the high-level problem statement comprising:
identifying (502) a right composition of one or more digital twin models to use, from the plurality of digital twin models in the integrated digital twin model, based on a digital twin model knowledge, and the plant view of interest at an instance;
identifying (504) a right solution configuration for solving the high-level problem statement, using a solution space knowledge, and the current plant view of interest; and
solving (506) the high-level problem statement using the right composition of one or more digital twin models and the right solution configuration.

5. The method as claimed in claim 3, wherein the digital twin model is updated if a measured performance of the digital twin model is below a threshold, wherein updating the digital twin model comprises:
identifying (602) one or more causes for a performance degradation of the digital twin model, based on the plant domain knowledge;
reformulating (604) the one or more detailed problem definitions; and
updating (606) the digital twin model by identifying a mode based on the identified one or more causes and reformulated one or more detailed problem definitions and invoking an associated model tuning workflow.

6. The method as claimed in claim 1, wherein the domain knowledge comprises plant knowledge, process knowledge, product knowledge, material knowledge, and phenomenon knowledge, at a plurality of abstraction levels.

7. The method as claimed in claim 1, wherein one of the one or more detailed technical problem definitions is of an optimization problem type, wherein defining the optimization problem type comprises executing a workflow for optimization problem definition using the plant domain knowledge and an optimization problem type knowledge, and wherein the workflow for optimization problem definition comprises one or more knowledge-guided steps for selecting one or more objectives, identifying one or more relevant Key Performance Indicators (KPIs), identifying one or more KPIs influencing variables, identifying one or more manipulated and disturbance variables, and identifying one or more constraints.

8. A system (100), comprising:
one or more hardware processors (102);
a communication interface (112); and
a memory (104) storing a plurality of instructions, wherein the plurality of instructions when executed, cause the one or more hardware processors to:
receive a high-level problem statement as input;
identify one or more problem types associated with the high-level problem statement;
derive one or more detailed technical problem definitions from the high-level problem statement, based on the one or more identified problem types, by executing one or more associated problem type specific problem definition workflows, using a plant domain knowledge and a problem knowledge; and
identify a plant view of interest for the detailed technical problem definition, using a plant configuration knowledge.

9. The system as claimed in claim 8, wherein the one or more hardware processors are configured to use the plant view of interest for identifying the plant data of interest, by:
receiving a real-time plant data as input, wherein the real-time plant data comprises values of a plurality of operational parameters;
comparing the received real-time plant data with a plurality of operational parameters identified in the plant view of interest; and
determining the plant data of interest based on matches found for the received real-time plant data with the plurality of operational parameters.

10. The system as claimed in claim 9, wherein the one or more hardware processors are configured to build a digital twin for the derived one or more technical problem definitions, using the plant domain knowledge, the problem knowledge and the plant data of interest, using one or more knowledge-guided workflows, by:
generating a plurality of digital twin models comprising physics-based and data-based digital twin models, by executing one or more knowledge guided workflows; and
generating an integrated digital twin by combining the plurality of digital twin models.

11. The system as claimed in claim 10, wherein the one or more hardware processors are configured to solve the high-level problem statement using the integrated digital twin model, by:
identifying a right composition of one or more digital twin models to use, from the plurality of digital twin models in the integrated digital twin model, based on a digital twin model knowledge, and the plant view of interest at an instance;
identifying a right solution configuration for solving the high-level problem statement, using a solution space knowledge, and the current plant view of interest; and
solving the high-level problem statement using the right composition of one or more digital twin models and the right solution configuration.

12. The system as claimed in claim 10, wherein the one or more hardware processors are configured to update the digital twin model if a measured performance of the digital twin model is below a threshold, by:
identifying one or more causes for a performance degradation of the digital twin model, based on the plant domain knowledge;
reformulating the one or more detailed problem definitions; and
updating the digital twin model by identifying a mode based on the identified one or more causes and reformulated one or more detailed problem definitions, and invoking an associated model tuning workflow.

13. The system as claimed in claim 8, wherein the domain knowledge comprises plant knowledge, process knowledge, product knowledge, material knowledge, and phenomenon knowledge, at a plurality of abstraction levels.

14. The system as claimed in claim 8, wherein one of the one or more detailed technical problem definitions is of an optimization problem type, wherein the one or more hardware processors are configured to define the optimization problem type by executing a workflow for optimization problem definition using the plant domain knowledge and an optimization problem type knowledge, and wherein the workflow for optimization problem definition comprises one or more knowledge-guided steps for selecting one or more objectives, identifying one or more relevant Key Performance Indicators (KPIs), identifying one or more KPIs influencing variables, identifying one or more manipulated and disturbance variables, and identifying one or more constraints.

15. One or more non-transitory machine-readable information storage mediums comprising one or more instructions which when executed by one or more hardware processors cause:
receiving a high-level problem statement as input;
identifying one or more problem types associated with the high-level problem statement;
deriving one or more detailed technical problem definitions from the high-level problem statement, based on the one or more identified problem types, by executing one or more associated problem type specific problem definition workflows, using a plant domain knowledge and a problem knowledge; and
identifying a plant view of interest for the detailed technical problem definition, using a plant configuration knowledge.
